# EUROPEAN PATENT SPECIFICATION

(11) **EP 3 999 581 B1**
(45) Date of publication and mention of the grant of the patent: **22.01.2025**
(21) Application number: 20737485.1
(22) Date of filing: 15.07.2020
(51) Int. Cl.: C08L 23/08, C08F 210/16, C08F 4/6592

(54) **PROCESS FOR PRODUCING A POLYMER COMPOSITION**
VERFAHREN ZUR HERSTELLUNG EINER POLYMERZUSAMMENSETZUNG
PROCÉDÉ DE PRODUCTION D'UNE COMPOSITION POLYMÈRE

(30) Priority: 17.07.2019 EP 19186850
(43) Date of publication of application: 25.05.2022
(73) Proprietor: Borealis AG, 1020 Vienna (AT)
(72) Inventor: GALGALI, Girish Suresh, 4020 Linz (AT); BERGER, Friedrich, 4021 Linz (AT); AHO, Jani, 06101 Porvoo (FI)
(74) Representative: Dehns
(86) International application number: PCT/EP2020/069928
(87) International publication number: WO 2021/009191

(56) References cited:
- EP-A1- 2 883 887
- US-A1- 2016 108 186
- US-A1- 2018 305 531

## Description

The present invention relates to a process for producing a polymer composition, especially for pipes, caps, closures, rotomolded articles, artificial grass mats, geomembranes, blow molded articles and/or mono or multilayer films.

Various processes for producing polymer compositions are known in the art. These comprise multi-stage processes that allow to fine tune the properties of the materials and for example to improve mechanical properties and/or processability or the balance thereof. US2018/305531 discloses a polymer blend of ethylene alpha olefin copolymers that is obtained by a three step process.

In addition, the use of metallocene catalysts to improve optical properties, like for example transparency and/or mechanical properties are also known in the art. However, in particular good optical appearance remains a significant challenge. This challenge becomes even more apparent and pressing with materials already having particularly good optical properties, especially a high transparency because in such cases, even slight defects such as for example gels can have a significant negative impact on optical appearance.

It is thus the object of the present invention to improve the optical appearance of articles produced with a polymer composition, especially a polymer composition having a high transparency and/or obtained with a metallocene catalyst.

Therefore, the present invention provides a process for producing a polymer composition wherein:
a first ethylene polymer component (A) is obtained in a first polymerization zone by polymerization conducted in slurry in the presence of ethylene, at least one comonomer selected from alpha-olefins having from 4 to 10 carbon atoms and optionally hydrogen and a second ethylene polymer component (B) is obtained in a second polymerization zone by polymerization conducted in slurry in the presence of ethylene, the first ethylene polymer component (A), at least one comonomer selected from alpha-olefins having from 4 to 10 carbon atoms and optionally hydrogen and a third ethylene polymer component (C ) is obtained in a third polymerization zone by polymerization conducted in gas phase in the presence of ethylene, optionally hydrogen and at least one comonomer selected from alpha-olefins having from 4 to 10 carbon atoms, to produce a multimodal polymer of ethylene (a) with at least one comonomer selected from alpha-olefins having from 4 to 10 carbon atoms,
   - which has
      a) a density between 900 and 960 kg/m³,
      b) MFR₂ of 0.1 to 25 g/10 min (according to ISO 1133 at 190°C under 2.16 kg load),
      c) MWD of 2.0 to 6.0,
   - which comprises at least
      - between 10 to < 25 wt% of an ethylene polymer component (A),
      - more than of an ethylene polymer component (A) of an ethylene polymer component (B) and
      - between > 45 and 65 wt% of an ethylene polymer component (C)
and wherein the densities of ethylene polymer components (A) and (B) are each between 925 and 950 kg/m³ and the density of ethylene polymer component (C) has a density between 880 and 950 kg/m³, wherein further the ethylene polymer components (A), (B) and (C) have different MFR₂ values.

The process according to the present invention thereby allows to combine good optical properties, especially a high transparency, and/or good mechanical properties and/or a good processability with a good optical appearance, especially a low level of defects, particularly low levels of gels, particularly low levels of gels with a size > 1000 microns and/or with a size of 600-1000 micron and/or with a size of 300-599 micron and/or with a size of 100-299 micron. Gels or defects may thereby especially for example be due to cross-linked and/or high molecular weight polymer components. High-transparency in the sense of the invention may be obtained for example for metallocene LLDPEs and/or may mean for example a light transmission in the visible spectrum of > 75 %, preferably > 80 %.

Different MFR₂ values in the sense of the present invention may thereby be for example values that differ by 0.5, 0.1, 0.01 or even 0.001. That the ethylene polymer components (A), (B) and (C) have different MFR₂ values may thereby mean that the multimodal ethylene polymer (a) may be for example bimodal or trimodal from a molecular weight point of view.

The molecular weight distribution (MWD) is thereby equivalent to Mw/Mn as measured by GPC in a suitable way.

The weight percent (wt%) of ethylene polymer components (A), (B) and (C) are given based on the weight of the polymer, namely the multimodal ethylene polymer (a), of the composition and thereby add up to > 93 wt%, preferably > 95 wt% or 100 wt% of the polymer, namely the multimodal ethylene polymer (a), in the polymer composition according to the invention. For avoidance of doubt, this means that values in weight percent (wt%) for ethylene polymer components (A), (B) and (C) may have to be selected, preferably in their respective ranges, so that they add up to > 93 wt%, preferably > 95 wt% or 100 wt% of the polymer, namely the multimodal ethylene polymer (a), in the polymer composition according to the invention.

In a process for producing a polymer composition according to the invention, the second ethylene polymer component (B) may preferably be obtained in the presence of the first ethylene polymer component (A) and/or the third ethylene polymer component (C) may be obtained in the presence of the first ethylene polymer component (A) and/or the second ethylene polymer component (B). Nonetheless (and in contrast to the second ethylene polymer component (B)), third ethylene polymer component (C) as used herein may preferably refer (only) to the component produced in the third polymerization zone, as such.

In a process for producing a polymer composition according to the invention, the first and/or second ethylene polymer components (A) and/or (B) may be copolymers of ethylene and of comonomer selected from of 1-butene, 1hexene and/or 1-octene, preferably 1-butene, and/or in that the third ethylene polymer component (C) is a copolymer of ethylene and of a comonomer selected from 1-butene, 1hexene and/or 1-octene, preferably 1-hexene. This may contribute to improve and/or optimize material properties, especially optical properties such as transparency, and/or mechanical properties.

In a process for producing a polymer composition according to the invention, the first and/or second polymerization zone may comprise at least one slurry loop reactor and the third polymerization zone comprises at least one gas phase reactor, preferably connected in series. This may contribute to improve and/or optimize material properties, especially optical properties such as transparency, and/or mechanical properties.

In a process for producing a polymer composition according to the invention, the first ethylene polymer component (A) may be produced in a slurry loop reactor and the second ethylene polymer component (B) may be produced in a slurry loop reactors, preferably where both slurry loop reactors are connected in series. This may contribute to improve the homogeneity of the composition.

In a process for producing a polymer composition according to the invention, the first and second polymerization zones each may comprise one slurry loop reactor connected in series, whereby hydrogen is fed only to the first of these slurry loop reactors and both of these slurry loops reactors are otherwise run under the same/similar conditions or different conditions, preferably under the same/similar conditions, whereby preferably both of these slurry loops reactors are run at a temperature of between 70 and 95 °C and/or a pressure of 5000-6000 kPa and/or preferably both of these slurry loops reactors are run at the same temperature ± 10 % or ± 5 °C and/or at the same pressure ± 10 % or ± 50 kPa. Similar conditions in the sense of the present inventions may thereby be conditions that deviate for example only by ± 25 %, ± 20 % or ± 10 %. The same conditions in the sense of the present invention are identical conditions. Different conditions in the sense of the invention may mean different by > ±20 %, preferably > ±25 %. This may further contribute to improve the homogeneity of the composition.

In a process for producing a polymer composition according to the invention, the polymerization of a third ethylene polymer component (C) in a third polymerization zone may preferably conducted in gas phase in the presence of at least one comonomer that is different from the comonomer present in the first and/or second polymerization zone, preferably so that the molecular weight is maximized and/or in the with no hydrogen fed to the second polymerization zone. This may further contribute to improve and/or optimize material properties, especially optical properties such as transparency, and/or mechanical properties.

In a process for producing a polymer composition according to the invention, the ethylene polymer component (A) may have an MFR₂ of 5 to 50, preferably of 7 to 40, more preferably of 10 to 37 g/10 min, further preferred 20 to 35 g/10min and/or the MFR₂ of the ethylene polymer component (A) may be equal or lower than the MFR₂ of the ethylene polymer component (B) and/or the ethylene polymer component (B) may have an MFR₂ 5 to 50 g/10 min, preferably of 5 to 45, preferably of 7 to 40, more preferably of 10 to 35 g/10 min, further preferred 15 to 30 g/10min, further preferred > 25 to < 30 g/10min and/or wherein the MFR₅ of the ethylene polymer component (C) may be from 0.001 to 5, preferably 0.01 to 1, preferably 0.02 to 0.5 g/10 min all measured according to ISO 1133 at 190°C under 2.16 kg or 5 kg load . This may further contribute to improve and/or optimize material properties, especially optical properties such as transparency, and/or mechanical properties. In addition, this may also contribute to improve the homogeneity of the composition.

In a process for producing a polymer composition according to the invention, the alpha-olefin comonomer having from 4 to 10 carbon atoms of ethylene polymer components (A) and (B) may be 1-butene and the alpha-olefin comonomer having from 4 to 10 carbon atoms of ethylene polymer component (C) may be 1-hexene and/or the multimodal polymer of ethylene (a) may comprise between 13 and 23 wt% of the ethylene polymer component (A) and/or between 25 and < 50, preferably 25 and 40, preferably 25 and 30 wt% of the ethylene polymer component (B) and/or between > 45 and 62, preferably > 45 and 58, preferably 50 and 55 wt% of the ethylene polymer component (C). This may further contribute to improve and/or optimize material properties, especially optical properties such as transparency, and/or mechanical properties.

In a process for producing a polymer composition according to the invention, the ethylene polymer component (B) may have a density equal or higher than the density of the ethylene polymer component (A). This may contribute to improve the homogeneity of the composition and/or to further improve the optical appearance.

In a process for producing a polymer composition according to the invention, the density of the ethylene component (C) is equal or lower than the density of the ethylene polymer component (A) and/or of ethylene polymer component (B). This may contribute to improve the homogeneity of the composition and/or to further improve the optical appearance.

In a process for producing a polymer composition according to the invention, the density of the ethylene polymer components (A) and (B) may be of 930 to 945, preferably 931 to 945, preferably > 931 to <945, preferably of 935 to 945 kg/m³ and/or the density of polymer component (C) may be of 905 to 955, preferably 910 to 940, preferably 915 to 950, further preferred 925 to 945 or 930 to 942 kg/m³. This may further contribute to improve and/or optimize material properties, especially optical properties such as transparency, and/or mechanical properties. **In** addition, this may also contribute to improve the homogeneity of the composition.

In a process for producing a polymer composition according to the invention, the density of the multimodal polymer of ethylene (a) may be of 915 to 955, preferably of 930 to 950, kg/m³ and/or the MFR₂ of the multimodal polymer of ethylene (a) may be between 0.1 and 10, preferably 0.5 and 8, preferably 0.6 and 3 g/10min and/or wherein the multimodal polymer of ethylene (a) has MFR₂₁/ MFR₂ of 10 to 40, preferably 15 to 35, preferably 20 to < 35, preferably > 25 to < 35 and/or the multimodal polymer of ethylene (a) has an MFR₅ of 1 to 5, preferably > 1 to < 3 g/10min. This may further contribute to improve and/or optimize material properties, especially optical properties such as transparency, and/or mechanical properties

In a process for producing a polymer composition according to the invention, the multimodal polymer of ethylene (a) may have a number of gels per square meter with a size of 600-1000 micron of 0 to below 300, preferably below 250, preferably below 200 and/or or wherein the multimodal polymer of ethylene (a) has a number of gels per square meter with a size of 300-599 micron of 0 to below 7000, preferably below 5000, below 3500, below 2500, below 2000 and/or or wherein the multimodal polymer of ethylene (a) has a number of gels per square meter with a size > 1000 micron of 0 to below 12, preferably below 10, preferably below 9, preferably below 8, preferably below 5 and/or a number of gels per square meter with a size of 100-299 micron of 0 to below 70000, preferably below 40000, preferably 20000 preferably below 14000. This may contribute to further improve the optical appearance

In a process for producing a polymer composition according to the invention, the multimodal polymer of ethylene (a) may be produced using a single site catalyst preferably a substituted and/or bridged bis-cyclopentadienyl zirconium or hafnium catalyst, preferably the ethylene polymer components (A), (B) and (C) of the polymer of ethylene (a) may be produced using same single site catalyst, preferably a substituted and/or bridged bis-cyclopentadienyl zirconium or hafnium catalyst and/or may have each an MWD of between 2.0 and 5.0, preferably 2.5 and 4.5, preferably > 2.5 and < 4.0. This may further contribute to improve and/or optimize material properties, especially optical properties such as transparency, and/or mechanical properties. In addition, this may also contribute to improve the homogeneity of the composition and/or the optical appearance.

The present invention also concerns a pipe, cap, closure, rotomolded article, artificial grass mat, geomembrane, blow molded article and/or mono or multilayer film comprising a polymer composition produced using a process according to the invention. Such articles may show good optical properties, especially a high transparency, and/or good mechanical properties and/or a good processability in combination with a good optical appearance, especially a low level of defects, particularly low levels of gels, particularly low levels of gels with a size > 1000 microns and/or with a size of 600-1000 micron and/or with a size of 300-599 micron and/or with a size of 100-299 micron. This may contribute to improve optical appearance.

To produce polymer compositions, such as in the present invention, two or more reactors or zones connected in series as described in EP 517 868 can be used.

According to the present invention, the main polymerization stages are preferably carried out as a combination of slurry polymerization/gas-phase polymerization. The slurry polymerization is preferably performed in a so-called slurry loop reactor.

Optionally, the main polymerization stages may be preceded by a pre-polymerization, in which case a prepolymer (P) may be produced in the amount of for example 0.1 to < 5% preferably 1 to 4 % by weight of the total amount of polymers is produced. The pre-polymer may be an ethylene homo- or copolymer, preferably an ethylene copolymer, further preferred with 1-butene or 1-hexene.

In the case there is a pre-polymerization the weight percent (wt%) of ethylene polymer components (A), (B) and (C) are given based on the weight of the polymer, namely the multimodal ethylene polymer (a), of the polymer composition and thereby add up to > 93 wt%, preferably > 95 wt%, of polymer, namely the multimodal ethylene polymer (a), in the polymer composition according to the invention, so that the weight percent (wt%) of ethylene polymer components (A), (B), (C) and prepolymer (P) have to be selected in their respective ranges to add up to 100 wt% based on the weight of polymer, namely the multimodal ethylene polymer (a), in the polymer composition. This may further contribute to improve and/or optimize material properties, especially optical properties such as transparency, and/or mechanical properties. In addition, this may also contribute to improve the homogeneity of the composition and/or the optical appearance.

The prepolymerization may thereby be carried out in the smallest of the reactors used, whereby preferably prepolymerization is carried out at temperature lower than the temperature in the first and/or second polymerization zone, preferably at a temperature lower than both slurry loop reactors, preferably in the range of 30 to < 70 °C and/or prepolymerization is carried out at a pressure of 5000-6000 kPa and/or in that the concentration of hydrogen (in mol/kmol) in the prepolymerization zone is the same as the concentration of hydrogen (in mol/kmol) in the first polymerization zone ± 30 %, preferably ± 20 %, preferably ± 10 % . This may further contribute to improve and/or optimize material properties, especially optical properties such as transparency, and/or mechanical properties. In addition, this may also contribute to improve the homogeneity of the composition and/or the optical appearance.

If a pre-polymerization takes place, in this case all of the catalyst is preferably charged into the first prepolymerization reactor and the pre-polymerization is performed as slurry polymerization. Such a polymerization leads to less fine particles being produced in the following reactors and to a more homogeneous product being obtained in the end.

The resulting multimodal polymer of ethylene (a) consists of an intimate mixture of the polymers from the three main reactors, the different molecular-weight-distribution curves of these polymers together forming a molecular-weight-distribution curve having a broad maximum or three maxima, i.e. the end product is a trimodal polymer mixture.

The polymer composition according to the invention may also comprise additives like process aids, antioxidants, pigments, UV-stabilizers and the like. Usually, the amount at those additives may be 0 to 10 wt% or > 0 to 10 wt%, based on the weight of the total composition. This means that the amount of polymer, namely the multimodal ethylene polymer (a), in the polymer composition may 90 wt% to 100 wt% or 90 wt% to < 100 wt%.

### Examples

Three samples IE1 IE2 and CE of were produced using prepolymerization followed by polymerization in a first slurry reactor (loop reactor 1) by feeding ethylene (C2), one metallocene catalyst as described below, 1-butene (C4) as comonomer, hydrogen and propane as a diluent. Whereby the first slurry loop reactor is connected in series with another slurry reactor (loop reactor 2), so that the first ethylene polymer component (A) produced in the loop reactor 1 is fed to the loop reactor 2. Ethylene (C2) is thereby polymerized in the presence of the polymer produced in the loop reactor 1, 1-butene (C4) as comonomer and hydrogen to produce a second ethylene component (B). The loop reactor 2 is thereby connected in series to a gas phase reactor (GPR), so that the second ethylene component (B) is fed to the GPR and ethylene is polymerized in the GPR with 1-hexene (C6) as comonomer as well as hydrogen to obtain a third ethylene polymer component (C), so as to produces multimodal polymers of ethylene (a).

The process comprises of a flash between loop2 reactor and GPR reactor, in order to remove the diluent and unreacted monomer(s).

The polymerization conditions are given in Table 1 below.

The MWD of each sample was determined to be in the range from 2-6 by GPC. Similarly, the MWD of each ethylene polymer component was determined to be in the range of 2 to 4 by GPC.

### Catalyst preparation:

130 grams of a metallocene complex bis(1-methyl-3-n-butylcyclopentadienyl) zirconium (IV) dichloride (CAS no. 151840-68-5) and 9.67 kg of a 30% solution of commercial methylalumoxane (MAO) in toluene were combined and 3.18 kg dry purified toluene was added. Thus, obtained complex solution was added onto 17kg silica carrier Sylopol 55 SJ (supplied by Grace) by very slow uniform spraying over 2 hours. The temperature was kept below 30°C. The mixture was allowed to react for 3 hours after complex addition at 30°C.

### Molecular weights, molecular weight distribution, Mn, Mw, MWD:

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrenedivinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 ×10⁻³ dL/g and a: 0.655 for PS, and K: 39 ×10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

### Gel content:

Gel content was analyzed by an Optical Control System (OCS Film-Test FSA100) with a CCD (Charged-Coupled Device) camera provided by Optical Control Systems GmbH, which measures gels and defects in the film produced from the compositions. The gels and defects are recognized optoelectronically by their different light transmittance compared to the film matrix.

A translucent 70 µm thick cast film was photographed using high resolution line cameras and appropriate background illumination. The number and the area of gels per total film area are then calculated using an image recognition software.

The film defects/gels are measured and classified according to their size (longest dimension).

Cast film preparation, extrusion parameters:
1. Output 25±4g/min
2. Extruder temperature profile 200/210/210/210/210-Die
3. Film thickness about 70 µm
4. Chill Roll temperature 20°C
5. airknife needed

Technical data for the extruder:
1. Screw type: 3 Zone, nitrated
2. Screw diameter:25mm
3. Screw length: 25D
4. Feeding zone: 10D
5. Compression zone: 4D
6. Die 150mm

The defects were classified according to the size (µm)/m2:
100-299
300-599
600-999
>1000

The results are also shown in Table 1 below. One can see that optical appearance is improved as the number of gels decreases for IE1 & IE2 compared to CE.

**Table 1.**

| Case | IE1 | IE2 | CE |
|---|---|---|---|
| Process | | | |
| **Prepolymerization** | | | |
| Catalyst feed (g/h) | 47.3 | 51.2 | 51.3 |
| Temp. (°C) | 50 | 50 | 50 |
| Pressure (kPa) | 5863 | 5859 | 5857 |
| C2 feed (kg/h) | 4 | 4 | 4 |
| H2 feed (g/h) | 0.2 | 0.2 | 0.2 |
| C4 feed (g/h) | 101.1 | 101.2 | 101.4 |
| Split (%) | 2.8 | 2.7 | 2.8 |

| **Ethylene polymer component A (loop reactor 1)** | | | |
|---|---|---|---|
| Temp. (°C) | 85 | 85 | 85 |
| Pressure (kPa) | 5665 | 5665 | 5665 |
| H2/C2 ratio (mol/kmol) | 0.3 | 0.4 | 0.4 |
| C4 feed (kg/h) | 0.85 | 1 | 1 |
| C2 (mol. %) | 3.4 | 2.5 | 3.8 |
| Split % | 20.9 | 20.2 | 28.1 |
| MFR2 (g/10 min) | 22 | 23 | 24 |
| Density (kg/m³) | 932 | 937 | 939 |

| **Ethylene polymer component B (loop reactor 2)** | | | |
|---|---|---|---|
| Temp. (°C) | 85 | 85 | 85 |
| Pressure(kPa) | 5567 | 5565 | 5567 |
| H2/C2 ratio (mol/kmol) | 0 | 0 | 0 |
| C4 feed (kg/h) | 1.6 | 1 | 1 |
| C2 (mol. %) | 2.9 | 2.4 | 2.2 |
| Split (%) | 26.8 | 26.2 | 20.9 |
| MFR2 (g/10 min) | 24.7 | 24 | 24 |
| Density (kg/m³) | 938 | 938 | 940 |

| **GPR (C)** | | | |
|---|---|---|---|
| Temp. (°C) | 75 | 75 | 75 |
| Pressure(kPa) | 2000 | 2000 | 2000 |
| H2/C2 ratio (mol/kmol) | 0.04 | 0.04 | 0.04 |
| C6/C2 ratio (mol/kmol) | 2.8 | 2.8 | 2.9 |
| Split % | 49.5 | 50.9 | 48.2 |
| MFR5 (g/10min) | 0.08 | 0.08 | 0.07 |
| Density (kg/m³) | 938 | 938 | 938 |

| **Final** | | | |
|---|---|---|---|
| Density (kg/m³) | 938 | 938 | 938 |
| MFR2 (g/10min) | 0.75 | 0.65 | 0.7 |
| MFR5 (g/10 min) | 2.3 | 1.8 | 2.1 |
| MFR21 (g/10min) | 25.1 | 19 | 23.1 |
| Gels/m2 > 1000 µm | 2 | 7.9 | 15 |
| Gels/m2 600-1000 µm | 184 | 170.7 | 371.3 |
| Gels/m2 300-599 µm | 1631 | 2398.5 | 7382.3 |
| Gels/m2 100-299 µm | 14718 | 11238.9 | 47312.5 |

## Claims

1. A process for producing a polymer composition **characterized in that** a first ethylene polymer component (A) is obtained in a first polymerization zone by polymerization conducted in slurry in the presence of ethylene, at least one comonomer selected from alpha-olefins having from 4 to 10 carbon atoms and optionally hydrogen and a second ethylene polymer component (B) is obtained in a second polymerization zone by polymerization conducted in slurry in the presence of ethylene, first ethylene polymer component (A), at least one comonomer selected from alpha-olefins having from 4 to 10 carbon atoms and optionally hydrogen and a third ethylene polymer component (C ) is obtained in a third polymerization zone by polymerization conducted in gas phase in the presence of ethylene, optionally hydrogen and at least one comonomer selected from alpha-olefins having from 4 to 10 carbon atoms, to produce a multimodal polymer of ethylene (a) with at least one comonomer selected from alpha-olefins having from 4 to 10 carbon atoms,
- which has
a) a density between 900 and 960 kg/m³,
b) MFR₂ of 0.1 to 25 g/10 min (according to ISO 1133 at 190°C under 2.16 kg load),
c) MWD of 2.0 to 6.0,
- which comprises at least
- between 10 to < 25 wt% of an ethylene polymer component (A),
- more ethylene polymer component (B) than ethylene polymer component (A) and
- between > 45 and 65 wt% of an ethylene polymer component (C) and wherein the densities of ethylene polymer components (A) and (B) are each between 925 and 950 kg/m³ and the density of ethylene polymer component (C) has a density between 880 and 950 kg/m³, wherein further the ethylene polymer components (A), (B) and (C) have different MFR₂ values.

2. A process for producing a polymer composition according to claim 1, **characterized in that** the first and/or second ethylene polymer components (A) and/or (B) is/are copolymers of ethylene and of comonomer selected from of 1-butene, 1hexene and/or 1-octene, preferably 1-butene, and/or **in that** the third ethylene polymer component (C) is a copolymer of ethylene and of a comonomer selected from 1-butene, 1hexene and/or 1-octene, preferably 1-hexene.

3. A process for producing a polymer composition according to claim 1 or 2, **characterized in that** the first and/or second polymerization zone comprise at least one slurry loop reactor and the third polymerization zone comprises at least one gas phase reactor, preferably connected in series.

4. A process for producing a polymer composition according to any of the preceding claims, **characterized in that** the first ethylene polymer component (A) is produced in a slurry loop reactor and the second ethylene polymer component (B) is produced in a slurry loop reactors, preferably where both slurry loop reactors are connected in series.

5. A process for producing a polymer composition according to any of the preceding claims, **characterized in that** the first and second polymerization zone each comprise one slurry loop reactor connected in series, whereby hydrogen is fed only to the first of these slurry loop reactors and both of these slurry loops reactors are otherwise run under the same/similar conditions or different conditions, preferably under the same/similar conditions, preferably both of these slurry loops reactors are run at a temperature of between 70 and 95 °C and/or a pressure of 5000-6000 kPa and/or preferably both of these slurry loops reactors are run at the same temperature ± 10 % or ± 5 °C and/or at the same pressure ±10 % or ± 50 kPa.

6. A process for producing a polymer composition according to any of the preceding claims **characterized in that** the polymerization of a third ethylene polymer component (C) in a third polymerization zone is preferably conducted in gas phase in the presence of at least one comonomer that is different from the comonomer present in the first and/or second polymerization zone, preferably so that the molecular weight is maximized and/or in the with no hydrogen fed to the second polymerization zone.

7. A process for producing a polymer composition according to any of the preceding claims , wherein the ethylene polymer component (A) has a MFR₂ of 5 to 50, preferably of 7 to 40, more preferably of 10 to 37 g/10 min, further preferred 20 to 35 g/10min and/or wherein the MFR₂ of the ethylene polymer component (A) is equal or lower than the MFR₂ of the ethylene polymer component (B) and/or wherein the ethylene polymer component (B) has an MFR₂ 5 to 50 g/10 min, preferably of 5 to 45, preferably of 7 to 40, more preferably of 10 to 35 g/10 min, further preferred 15 to 30 g/10min, further preferred > 24 to < 30 g/10min and/or wherein the MFR₅ of the ethylene polymer component (C) is from 0.001 to 5, preferably 0.01 to 1, preferably 0.02 to 0.5 g/10 min all measured according to ISO 1133 at 190°C under 2.16 kg or 5 kg load .

8. A process for producing a polymer composition according to any of the preceding claims, wherein the alpha-olefin comonomer having from 4 to 10 carbon atoms of ethylene polymer components (A) and (B) is 1-butene and the alpha-olefin comonomer having from 4 to 10 carbon atoms of ethylene polymer component (C) is 1-hexene and/or wherein the multimodal polymer of ethylene (a) comprises between 13 and 23 wt% of the ethylene polymer component (A) and/or between 25 and < 50, preferably 25 and 40, preferably 25 and 30 wt% of the ethylene polymer component (B) and/or between > 45 and 62, preferably > 45 and 58, preferably 50 and 55 wt% of the ethylene polymer component (C).

9. A process for producing a polymer composition according to any of the preceding claims, wherein the ethylene polymer component (B) has a density equal or higher than the density of the ethylene polymer component (A).

10. A process for producing a polymer composition according to any of the preceding claims, wherein the density of the ethylene component (C) is equal or lower than the density of the ethylene polymer component (A) and/or of ethylene polymer component (B)

11. A process for producing a polymer composition according to any of the preceding claims, wherein the density of the ethylene polymer components (A) and (B) is of 930 to 945, preferably 931 to 945, preferably > 931 to <945, preferably of 935 to 945 or > 930 to < 937 kg/m3 and/or the density of polymer component (C) is of 905 to 955, preferably 910 to 940, preferably 915 to 950, further preferred 925 to 945 or 930 to 942 kg/m3.

12. A process for producing a polymer composition according to any of the preceding claims, wherein the density of the multimodal polymer of ethylene (a) is of 915 to 955, preferably of 930 to 950, kg/m3 and/or wherein the MFR2 of the multimodal polymer of ethylene (a) is between 0.1 and 10, preferably 0.5 and 8, preferably 0.6 and 3 g/10min and/or wherein the multimodal polymer of ethylene (a) has MFR21/ MFR2 of 10 to 40, preferably 15 to 35, preferably 20 to < 35, preferably > 25 to < 35 and/or wherein the multimodal polymer of ethylene (a) has an MFR5 of 1 to 5, preferably > 1 to < 3 g/10min.

13. A process for producing a polymer composition according to any of the preceding claims, wherein the multimodal polymer of ethylene (a) has a number of gels per square meter with a size of 600-1000 micron of 0 to below 300, preferably below 250, preferably below 200 and/or wherein the multimodal polymer of ethylene (a) has a number of gels per square meter with a size of 300-599 micron of 0 to below 7000, preferably below 5000, below 3500, below 2500, below 2000 and/or wherein the multimodal polymer of ethylene (a) has a number of gels per square meter with a size > 1000 micron of 0 to below 12, preferably below 10, preferably below 9, preferably below 8, preferably below 5 and/or wherein the multimodal polymer of ethylene (a) has a number of gels per square meter with a size of 100-299 micron of 0 to below 70000, preferably below 40000, preferably 20000 preferably below 14000.

14. A process for producing a polymer according to any of the preceding claims, wherein the multimodal polymer of ethylene (a) is produced using a single site catalyst preferably a substituted and/or bridged bis-cyclopentadienyl zirconium or hafnium catalyst, preferably wherein the ethylene polymer components (A), (B) and (C) of the polymer of ethylene (a) is produced using same single site catalyst, preferably a substituted and/or bridged bis-cyclopentadienyl zirconium or hafnium catalyst and/or have each an MWD of between 2.0 and 5.0, preferably 2.5 and 4.5, preferably > 2.5 and < 4.

## Patentansprüche

1. Prozess zur Herstellung einer Polymerzusammensetzung, **dadurch gekennzeichnet, dass** eine erste Ethylenpolymerkomponente (A) in einer ersten Polymerisationszone durch in Aufschlämmung durchgeführte Polymerisation in Gegenwart von Ethylen, mindestens einem Comonomer, ausgewählt aus Alpha-Olefinen, die 4 bis 10 Kohlenstoffatome und optional Wasserstoff aufweisen, erhalten wird, und eine zweite Ethylenpolymerkomponente (B) in einer zweiten Polymerisationszone durch in Aufschlämmung durchgeführte Polymerisation in Gegenwart von Ethylen, der ersten Ethylenpolymerkomponente (A), mindestens einem Comonomer, ausgewählt aus alpha-Olefinen, die 4 bis 10 Kohlenstoffatome, und optional Wasserstoff aufweisen, erhalten wird und eine dritte Ethylenpolymerkomponente (C ) in einer dritten Polymerisationszone durch in Gasphase durchgeführte Polymerisation in Gegenwart von Ethylen, optional Wasserstoff und mindestens einem Comonomer, ausgewählt aus Alpha-Olefinen, die 4 bis 10 Kohlenstoffatome aufweisen, erhalten wird, um ein multimodales Polymer von Ethylen (a) mit mindestens einem Comonomer, ausgewählt aus Alpha-Olefinen, die 4 bis 10 Kohlenstoffatome aufweisen, herzustellen,
- welches aufweist
a) eine Dichte zwischen 900 und 960 kg/m³,
b) MFR₂ von 0,1 bis 25 g/10 Min. (gemäß ISO 1133 bei 190°C unter 2,16 kg Last),
c) MWD von 2,0 bis 6,0,
- welches mindestens umfasst
- zwischen 10 und < 25 Gew.-% einer Ethylenpolymerkomponente (A),
- mehr Ethylenpolymerkomponente (B) als Ethylenpolymerkomponente (A) und
- zwischen > 45 und 65 Gew.-% einer Ethylenpolymerkomponente (C)
und wobei die Dichten von Ethylenpolymerkomponenten (A) und (B) jeweils zwischen 925 und 950 kg/m³ betragen und die Dichte von Ethylenpolymerkomponente (C) eine Dichte zwischen 880 und 950 kg/m³, aufweist, wobei die Ethylenpolymerkomponenten (A), (B) und (C) weiter unterschiedliche MFR₂-Werte aufweisen.

2. Prozess zur Herstellung einer Polymerzusammensetzung nach Anspruch 1, **dadurch gekennzeichnet, dass** die erste und/oder zweite Ethylenpolymerkomponente (A) und/oder (B) Copolymere aus Ethylen und einem Comonomer, ausgewählt aus 1-Buten, 1-Hexen und/oder 1-Octen, vorzugsweise 1-Buten, ist/sind, und/oder dadurch, dass die dritte Ethylenpolymerkomponente (C) ein Copolymer aus Ethylen und einem Comonomer, ausgewählt aus 1-Buten, 1-Hexen und/oder 1-Octen, vorzugsweise 1-Hexen, ist.

3. Prozess zur Herstellung einer Polymerzusammensetzung nach Anspruch 1 oder 2, **dadurch gekennzeichnet, dass** die erste und/oder zweite Polymerisationszone mindestens einen Aufschlämmungsschleifenreaktor umfasst und die dritte Polymerisationszone mindestens einen Gasphasenreaktor umfasst, der vorzugsweise in Reihe verbunden ist.

4. Prozess zur Herstellung einer Polymerzusammensetzung nach einem der vorstehenden Ansprüche, **dadurch gekennzeichnet, dass** die erste Ethylenpolymerkomponente (A) in einem Aufschlämmungsschleifenreaktor hergestellt wird, und die zweite Ethylenpolymerkomponente (B) in einem Aufschlämmungsschleifenreaktor hergestellt wird, wobei vorzugsweise beide Aufschlämmungsschleifenreaktoren in Reihe verbunden sind.

5. Prozess zur Herstellung einer Polymerzusammensetzung nach einem der vorstehenden Ansprüche, **dadurch gekennzeichnet, dass** die erste und zweite Polymerisationszone jeweils einen in Reihe verbundenen Aufschlämmungsreaktor umfassen, wobei Wasserstoff nur dem ersten dieser Aufschlämmungsreaktoren zugeführt wird und beide dieser Aufschlämmungsreaktoren ansonsten unter den gleichen/ähnlichen Bedingungen oder unterschiedlichen Bedingungen, vorzugsweise unter gleichen/ähnlichen Bedingungen betrieben werden, beide dieser Aufschlämmungsschleifenreaktoren vorzugsweise mit einer Temperatur zwischen 70 und 95 °C und/oder einem Druck von 5000-6000 kPa betrieben werden und/oder beide dieser Aufschlämmungsschleifenreaktoren vorzugsweise mit der gleichen Temperatur ± 10 % oder ± 5 °C und/oder mit dem gleichen Druck ± 10 % oder ± 50 kPa betrieben werden.

6. Prozess zur Herstellung einer Polymerzusammensetzung nach einem der vorstehenden Ansprüche, **dadurch gekennzeichnet, dass** die Polymerisation einer dritten Ethylenpolymerkomponente (C) in einer dritten Polymerisationszone vorzugsweise in Gasphase in Gegenwart von mindestens einem Comonomer durchgeführt wird, das sich von dem in der ersten und/oder zweiten Polymerisationszone vorhandenen Comonomer unterscheidet, sodass das Molekulargewicht vorzugsweise maximiert wird, und/oder in der zweiten Polymerisationszone kein Wasserstoff zugeführt wird.

7. Prozess zur Herstellung einer Polymerzusammensetzung nach einem der vorstehenden Ansprüche, wobei die Ethylenpolymerkomponente (A) eine MFR₂ von 5 bis 50, vorzugsweise von 7 bis 40, bevorzugter von 10 bis 37 g/10 min, weiter bevorzugt 20 bis 35 g/10 min aufweist, und/oder wobei die MFR₂ der Ethylenpolymerkomponente (A) gleich oder niedriger ist als die MFR₂der Ethylenpolymerkomponente (B) und/oder wobei die Ethylenpolymerkomponente (B) eine MFR₂ von 5 bis 50 g/10 min, vorzugsweise von 5 bis 45, vorzugsweise von 7 bis 40, bevorzugter von 10 bis 35 g/10min, weiter bevorzugt 15 bis 30 g/10min, weiter bevorzugt > 24 bis < 30 g/10min aufweist und/oder wobei die MFR5 der Ethylenpolymerkomponente (C) von 0,001 bis 5, vorzugsweise 0,01 bis 1, vorzugsweise 0,02 bis 0,5 g/10 min, alle nach ISO 1133 bei 190°C unter 2,16 kg oder 5 kg Last gemessen, beträgt.

8. Prozess zur Herstellung einer Polymerzusammensetzung nach einem der vorstehenden Ansprüche, wobei das alpha-Olefin-Comonomer, das 4 bis 10 Kohlenstoffatome aufweist, der Ethylenpolymerkomponenten (A) und (B) 1-Buten ist und das alpha-Olefin-Comonomer, das 4 bis 10 Kohlenstoffatome aufweist, der Ethylenpolymerkomponente (C) 1-Hexen ist und/oder wobei das multimodale Polymer des Ethylens (a) zwischen 13 und 23 Gew.-% der Ethylenpolymerkomponente (A) und/oder zwischen 25 und < 50, vorzugsweise 25 und 40, vorzugsweise 25 und 30 Gew.-% der Ethylenpolymerkomponente (B) und/oder zwischen > 45 und 62, vorzugsweise > 45 und 58, vorzugsweise 50 und 55 Gew.-% der Ethylenpolymerkomponente (C) umfasst.

9. Prozess zur Herstellung einer Polymerzusammensetzung nach einem der vorstehenden Ansprüche, wobei die Ethylenpolymerkomponente (B) eine Dichte aufweist, die gleich oder höher als die Dichte der Ethylenpolymerkomponente (A) ist.

10. Prozess zur Herstellung einer Polymerzusammensetzung nach einem der vorstehenden Ansprüche, wobei die Dichte der Ethylenkomponente (C) gleich oder geringer ist als die Dichte der Ethylenpolymerkomponente (A) und/oder von Ethylenpolymerkomponente (B)

11. Prozess zur Herstellung einer Polymerzusammensetzung nach einem der vorstehenden Ansprüche, wobei die Dichte der Ethylenpolymerkomponenten (A) und (B) 930 bis 945, vorzugsweise 931 bis 945, vorzugsweise > 931 bis < 945, vorzugsweise 935 bis 945 oder > 930 bis < 937 kg/m3 beträgt und/oder die Dichte von Polymerkomponente (C) 905 bis 955, vorzugsweise 910 bis 940, vorzugsweise 915 bis 950, weiter bevorzugt 925 bis 945 oder 930 bis 942 kg/m3 beträgt.

12. Prozess zur Herstellung einer Polymerzusammensetzung nach einem der vorstehenden Ansprüche, wobei die Dichte des multimodalen Polymers aus Ethylen (a) 915 bis 955, vorzugsweise 930 bis 950, kg/m3 beträgt und/oder wobei die MFR2 des multimodalen Polymers aus Ethylen (a) zwischen 0,1 und 10, vorzugsweise 0,5 und 8, vorzugsweise 0,6 und 3 g/10min beträgt und/oder wobei das multimodale Polymer von Ethylen (a) eine MFR21/ MFR2 von 10 bis 40, vorzugsweise 15 bis 35, vorzugsweise 20 bis < 35, vorzugsweise > 25 bis < 35 aufweist und/oder wobei das multimodale Polymer von Ethylen (a) eine MFR5 von 1 bis 5, vorzugsweise > 1 bis < 3 g/10min aufweist.

13. Prozess zur Herstellung einer Polymerzusammensetzung nach einem der vorstehenden Ansprüche, wobei das multimodale Polymer von Ethylen (a) eine Anzahl an Gelen pro Quadratmeter mit einer Größe von 600-1000 Mikrometern von 0 bis unter 300, vorzugsweise unter 250, vorzugsweise unter 200 aufweist und/oder wobei das multimodale Polymer von Ethylen (a) eine Anzahl an Gelen pro Quadratmeter mit einer Größe von 300-599 Mikrometern von 0 bis unter 7000, vorzugsweise unter 5000, unter 3500, unter 2500, unter 2000 und/oder wobei das multimodale Polymer von Ethylen (a) eine Anzahl an Gelen pro Quadratmeter mit einer Größe > 1000 Mikrometern von 0 bis unter 12, vorzugsweise unter 10, vorzugsweise unter 9, vorzugsweise unter 8, vorzugsweise unter 5 aufweist und/oder wobei das multimodale Polymer von Ethylen (a) eine Anzahl an Gelen pro Quadratmeter mit einer Größe von 100-299 Mikrometern von 0 bis unter 70000, vorzugsweise unter 40000, vorzugsweise 20000, vorzugsweise unter 14000 aufweist.

14. Prozess zur Herstellung eines Polymers nach einem der vorstehenden Ansprüche, wobei das multimodale Polymer von Ethylen (a) unter Verwendung eines Einzelstellenkatalysators, vorzugsweise eines substituierten und/oder verbrückten Bis-Cyclopentadienyl-Zirkonium- oder Hafnium-Katalysators, hergestellt wird, wobei die Ethylenpolymer-Komponenten (A), (B) und (C) des Polymers von Ethylen (a) vorzugsweise unter Verwendung desselben Einzelstellenkatalysators, vorzugsweise eines substituierten und/oder verbrückten Bis-Cyclopentadienyl-Zirkonium- oder Hafnium-Katalysators, hergestellt werden und/oder jeweils eine MWD zwischen 2,0 und 5,0, vorzugsweise 2,5 und 4,5, vorzugsweise >2,5 und < 4 aufweisen.

## Revendications

1. Procédé de production d'une composition polymère **caractérisé en ce qu'**un premier composant polymère d'éthylène (A) est obtenu dans une première zone de polymérisation par polymérisation réalisée en suspension en présence d'éthylène, d'au moins un comonomère choisi parmi les alpha-oléfines présentant de 4 à 10 atomes de carbone et éventuellement d'hydrogène et un deuxième composant polymère d'éthylène (B) est obtenu dans une deuxième zone de polymérisation par polymérisation réalisée en suspension en présence d'éthylène, du premier composant polymère d'éthylène (A), d'au moins un comonomère choisi parmi les alpha-oléfines présentant de 4 à 10 atomes de carbone et éventuellement d'hydrogène et un troisième composant polymère d'éthylène (C) est obtenu dans une troisième zone de polymérisation par polymérisation réalisée en phase gazeuse en présence d'éthylène, éventuellement d'hydrogène et d'au moins un comonomère choisi parmi les alpha-oléfines présentant de 4 à 10 atomes de carbone, pour produire un polymère multimodal d'éthylène (a) avec au moins un comonomère choisi parmi les alpha-oléfines présentant de 4 à 10 atomes de carbone atomes,
- qui présente
a) une densité comprise entre 900 et 960 kg/m³,
b) MFR₂ de 0,1 à 25 g/10 min (selon ISO 1133 à 190°C sous une charge de 2,16 kg),
c) MWD de 2,0 à 6,0,
- qui comprend au moins
- entre 10 et < 25 % en poids d'un composant polymère d'éthylène (A),
- plus de composant polymère d'éthylène (B) que de composant polymère d'éthylène (A) et
- entre > 45 et 65 % en poids d'un composant polymère d'éthylène (C)
et dans lequel les densités des composants polymères d'éthylène (A) et (B) sont chacune comprises entre 925 et 950 kg/m³ et la densité du composant polymère d'éthylène (C) présente une densité comprise entre 880 et 950 kg/m³, dans lequel en outre les composants polymères d'éthylène (A), (B) et (C) présentent des valeurs MFR₂ différentes.

2. Procédé de production d'une composition polymère selon la revendication 1, **caractérisé en ce que** le premier et/ou le deuxième composants polymères d'éthylène (A) et/ou (B) est/sont des copolymères d'éthylène et de comonomère choisi parmi le 1-butène, le 1-hexène et/ou le 1-octène, de préférence le 1-butène, et/ou **en ce que** le troisième composant polymère d'éthylène (C) est un copolymère d'éthylène et d'un comonomère choisi parmi le 1-butène, le 1-hexène et/ou le 1-octène, de préférence le 1-hexène.

3. Procédé de production d'une composition polymère selon la revendication 1 ou 2, **caractérisé en ce que** la première et/ou la deuxième zone de polymérisation comprennent au moins un réacteur à boucle en suspension et la troisième zone de polymérisation comprend au moins un réacteur en phase gazeuse, de préférence reliés en série.

4. Procédé de production d'une composition polymère selon l'une quelconque des revendications précédentes, **caractérisé en ce que** le premier composant polymère d'éthylène (A) est produit dans un réacteur à boucle en suspension et le deuxième composant polymère d'éthylène (B) est produit dans un réacteur à boucle en suspension, de préférence les deux réacteurs à boucle en suspension étant reliés en série.

5. Procédé de production d'une composition polymère selon l'une quelconque des revendications précédentes, **caractérisé en ce que** la première et la deuxième zones de polymérisation comprennent chacune un réacteur à boucle en suspension relié en série, de sorte que de l'hydrogène soit alimenté uniquement au premier de ces réacteurs à boucle en suspension et que ces deux réacteurs à boucle en suspension fonctionnent par ailleurs dans des conditions identiques/similaires ou dans des conditions différentes, de préférence dans des conditions identiques/similaires, de préférence ces deux réacteurs à boucle en suspension fonctionnent à une température comprise entre 70 et 95 °C et/ou une pression de 5000-6000 kPa et/ou de préférence ces deux réacteurs à boucle en suspension fonctionnent à la même température ± 10 % ou ± 5 °C et/ou à la même pression ± 10 % ou ± 50 kPa.

6. Procédé de production d'une composition polymère selon l'une quelconque des revendications précédentes, **caractérisé en ce que** la polymérisation d'un troisième composant polymère d'éthylène (C) dans une troisième zone de polymérisation est de préférence réalisée en phase gazeuse en présence d'au moins un comonomère différent du comonomère présent dans la première et/ou la deuxième zones de polymérisation, de préférence de sorte que le poids moléculaire soit maximisé et/ou qu'il ne soit pas introduit d'hydrogène dans la deuxième zone de polymérisation.

7. Procédé de production d'une composition polymère selon l'une quelconque des revendications précédentes, dans lequel le composant polymère d'éthylène (A) présente un MFR₂ de 5 à 50, de préférence de 7 à 40, avec plus préférentiellement de 10 à 37 g/10 min, avec encore plus préférentiellement 20 à 35 g/10 min et/ou dans lequel le MFR₂ du composant polymère d'éthylène (A) est égal ou inférieur au MFR₂ du composant polymère d'éthylène (B) et/ou dans lequel le composant polymère d'éthylène (B) présente un MFR₂ de 5 à 50 g/10 min, de préférence de 5 à 45, avec plus préférentiellement de 7 à 40, avec encore plus préférentiellement de 10 à 35 g/10 min, avec encore plus préférentiellement de 15 à 30 g/10 min, avec encore plus préférentiellement de > 24 à < 30 g/10 min et/ou dans lequel le MFR5 du composant polymère d'éthylène (C) est de 0,001 à 5, de préférence de 0,01 à 1, avec plus préférentiellement de 0,02 à 0,5 g/10 min, toutes les mesures étant selon la norme ISO 1133 à 190 °C sous une charge de 2,16 kg ou 5 kg.

8. Procédé de production d'une composition polymère selon l'une quelconque des revendications précédentes, dans lequel le comonomère alpha-oléfine présentant de 4 à 10 atomes de carbone des composants polymères d'éthylène (A) et (B) est le 1-butène et le comonomère alpha-oléfine présentant de 4 à 10 atomes de carbone du composant polymère d'éthylène (C) est le 1-hexène et/ou dans lequel le polymère multimodal d'éthylène (a) comprend entre 13 et 23 % en poids du composant polymère d'éthylène (A) et/ou entre 25 et < 50, de préférence 25 et 40, de préférence 25 et 30% en poids du composant polymère d'éthylène (B) et/ou entre > 45 et 62, de préférence > 45 et 58, de préférence 50 et 55 % en poids du composant polymère d'éthylène (C).

9. Procédé de production d'une composition polymère selon l'une quelconque des revendications précédentes, dans lequel le composant polymère d'éthylène (B) présente une densité égale ou supérieure à la densité du composant polymère d'éthylène (A).

10. Procédé de production d'une composition polymère selon l'une quelconque des revendications précédentes, dans lequel la densité du composant éthylène (C) est égale ou inférieure à la densité du composant polymère éthylène (A) et/ou du composant polymère d'éthylène (B)

11. Procédé de production d'une composition polymère selon l'une quelconque des revendications précédentes, dans lequel la densité des composants polymères d'éthylène (A) et (B) est de 930 à 945, de préférence de 931 à 945, de préférence > 931 à < 945, de préférence de 935 à 945 ou de > 930 à < 937 kg/m3 et/ou la densité du composant polymère (C) est de 905 à 955, de préférence de 910 à 940, de préférence de 915 à 950, avec plus de préférence de 925 à 945 ou de 930 à 942 kg/m3.

12. Procédé de production d'une composition polymère selon l'une quelconque des revendications précédentes, dans lequel la densité du polymère multimodal d'éthylène (a) est de 915 à 955, de préférence de 930 à 950 kg/m3 et/ou dans lequel le MFR2 du polymère multimodal d'éthylène (a) est compris entre 0,1 et 10, de préférence 0,5 et 8, de préférence 0,6 et 3 g/10 min et/ou dans lequel le polymère multimodal d'éthylène (a) présente un MFR21/MFR2 de 10 à 40, de préférence de 15 à 35, de préférence de 20 à < 35, de préférence > 25 à < 35 et/ou dans lequel le polymère multimodal d'éthylène (a) présente un MFR5 de 1 à 5, de préférence de > 1 à < 3 g/10 min.

13. Procédé de production d'une composition polymère selon l'une quelconque des revendications précédentes, dans lequel le polymère multimodal d'éthylène (a) présente un nombre de gels par mètre carré d'une taille de 600-1000 microns de 0 à moins de 300, de préférence moins de 250, de préférence moins de 200 et/ou dans lequel le polymère multimodal d'éthylène (a) présente un nombre de gels par mètre carré d'une taille de 300-599 microns de 0 à moins de 7000, de préférence moins de 5000, moins de 3500, moins de 2500, moins de 2000 et/ou dans lequel le polymère multimodal d'éthylène (a) présente un nombre de gels par mètre carré avec une taille > 1000 microns de 0 à moins de 12, de préférence moins de 10, de préférence moins de 9, de préférence moins de 8, de préférence moins de 5 et/ou dans lequel le polymère multimodal d'éthylène (a) présente un nombre de gels par mètre carré d'une taille de 100-299 microns de 0 à moins de 70 000, de préférence moins de 40 000, de préférence 20 000, de préférence moins de 14 000.

14. Procédé de production d'un polymère selon l'une quelconque des revendications précédentes, dans lequel le polymère multimodal d'éthylène (a) est produit en utilisant un catalyseur à site unique, de préférence un catalyseur bis-cyclopentadiényl zirconium ou hafnium substitué et/ou ponté, de préférence dans lequel les composants polymères d'éthylène (A), (B) et (C) du polymère d'éthylène (a) sont produits à l'aide du même catalyseur à site unique, de préférence un catalyseur bis-cyclopentadiényl zirconium ou hafnium substitué et/ou ponté et/ou présentent chacun un MWD compris entre 2,0 et 5,0, de préférence 2,5 et 4,5, de préférence > 2,5 et < 4.
